(19) Europäisches Patentamt

European Patent Office

Office européen des brevets

(11) **EP 1 313 345 A2**

(12) **EUROPEAN PATENT APPLICATION**

(43) Date of publication:
**21.05.2003 Bulletin 2003/21**

(51) Int Cl.⁷: **H04Q 7/38**

(21) Application number: **02257768.8**

(22) Date of filing: **08.11.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(30) Priority: **19.11.2001 GB 0127671**<br><br>(71) Applicant: **Hutchison Whampoa Three G IP**<br>**(Bahamas) Limited**<br>**Nassau, New Providence (BS)** | (72) Inventor: **Efthymiou, Nektaria**<br>**Leatherhead, Surrey KT22 8LZ (GB)**<br><br>(74) Representative: **Dawson, Elizabeth Ann et al**<br>**A.A. Thornton & Co.**<br>**235 High Holborn**<br>**London WC1V 7LE (GB)** |

(54) **Bite rate allocation in mobile communications networks**

(57) In a WCDMA network, bit rate is allocated to data flows between a transceiver and a base station taking account the link budget which is usually generated at the radio planning stage. The link budget relates path loss to supportable bit rates. Path loss measurements are either provided by a transceiver or calculated from signals supplied by the transceiver.

Figure 1

Printed by Jouve, 75001 PARIS (FR)

**Description**

The present invention relates to bit rate allocation in digital mobile communications networks.

As is well known, a mobile communications system enables communications over a geographical area divided into cells, each cell having a base station transmitter (BTS) which transmits digital data to and/or receives digital data from mobile transceivers within the cell.

With the advent of the third generation (so called 3G) communications system, a variety of types of communication between BTS and transmitter will become possible including not only voice calls but data transfer using Internet Protocol and the sending of video footage. Thus, the transfer of data may take place at various bit rates depending on a number of factors including the nature of the information being transmitted.

The setting up of a cellular communications network commences with a radio plan in which it is decided where BTS equipment should be sited in order to maximise coverage of an area. Each BTS serves an area known as a cell.

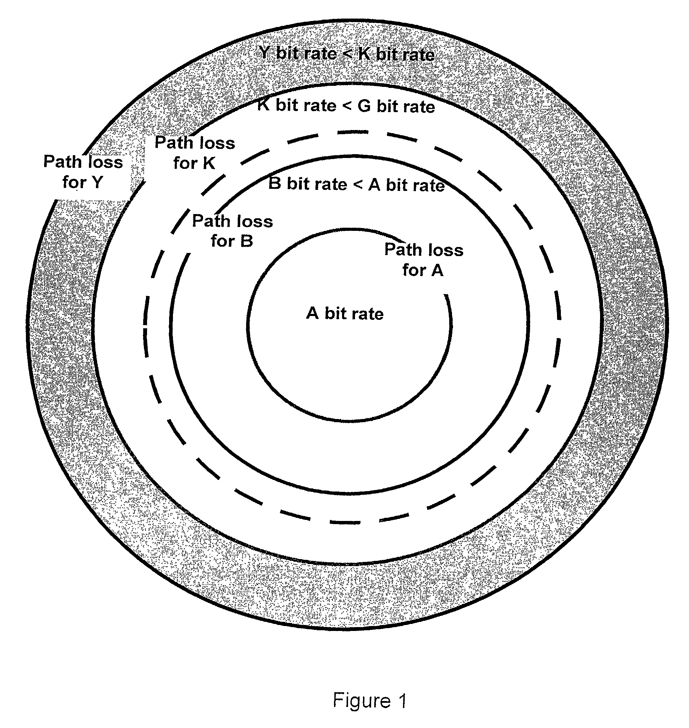

In a radio plan, a cell includes regions, which indicate what bit rate for users can reasonably be supported by the network within each region. This assists the planner in determining whether areas are adequately covered before a network goes live. An example of cell planning coverage area is shown in Figure 1.

One of the parameters used to define what bit rates can be supported in different regions is the path loss, defined as follows:

$$\text{Path loss} = \text{Transmitted power} - \text{received power}.$$

Figure 1 shows four regions in a cell bounded by concentric circles centred on the BTS. The following notation is used:

Bit rate A is the highest bit rate that can be achieved in the cell
Bit rate A > B, B > G, G >K,..... K>Y

Each bit rate region corresponds to path loss region.

Figure 2 is a diagram similar to Figure 1 giving specific examples of bit rate and path loss regions.

The cell plan, which relates bit rate, path loss, interference and other cell parameters gives an indication of resources available in each region, known as the link budget.

In most of the network implementations envisaged hitherto, the dynamic allocation and the admission of the users in the system is performed using as a criterion the cell loading (which mainly depends on the number of users) and/or the system capabilities and or user capabilities. The link budget is used only as a planning method before the network becomes operational. The cell loading however, depends on the number of users in the system and this sometimes implies that when the system does not have a lot of users, it can admit at the edge of the cell users with high bit rate even if this region of the cell has not been planned to be used at such high bit rates.

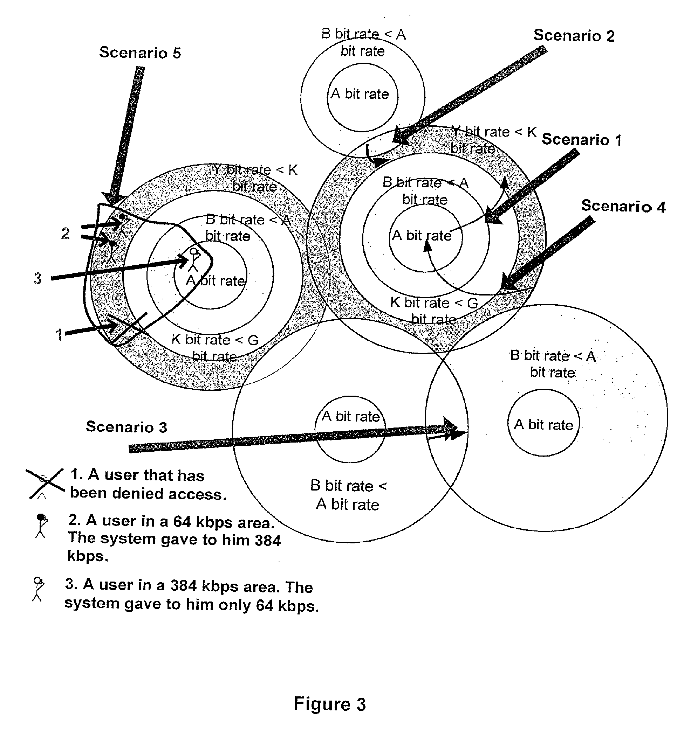

The allocation of bit rate in this way can lead to some unwanted scenarios some of which are described below with reference to Figure 3.

*Scenario 1.*

In scenario 1 the user is moving away from the BTS. For the sake of this scenario lets assume that 'A' = 384 kbps and the user is using Non Real Time Service. Assuming that he has been allocated 384 kbps bit rate initially, his bit rate may not change if:

a. The user does not become inactive so to be switched to common channels

b. Or/and the system does not support switch to common channels if the user becomes inactive

c. Or/and the cell does not become congested so there is no reason for this user to be switched to common channels or to be released

d. Or/and the system does not support congestion control

The possible issues that can appear if the system does not switch a high bit rate user to a lower bit rate as he moves away from the BTS are:

*1. The high bit rate user (e.g. user at A kbps ) will enter an area which has been designed for K kbps. However, because the system does not switch this user to k kbps the user keeps consuming resources from the system. The problem is that if a new user enters the system at K kbps area, the system may reject him because most of the resources within area 'K kbps' are occupied by users connected at A Kbps (see also scenario 5).*

*2. Assume that the user is moving towards an overlapping area of K kbps, but he is still using A kbps. If the system will not switch him to K kbps, then since he is moving towards an overlapping area, eventually he will ask for handover at A kbps. However, because the overlapping area is for K kbps, the system will reject him for the handover. However, because the handover has been rejected, he may create interference problems to users in the new cell, because he is transmitting at A kbps. Creating interference problems to these users, a lot of unsatisfied users might be created (see also scenario 2). Eventually this user will drop the call as he moves away from the BTS.*

### Scenario 2

In this scenario the user at high bit rate is trying to request a handover with a cell that does not support this bit rate. If the cell cannot switch the user to a lower bit rate as he moves away from the BTS then the user may be dropped.

### Scenario 3

We may also want to disable areas with low and too high bit rates and have only a homogenous service area.

### Scenario 4

A user that is connected at K kbps is moving towards the BTS, but the system does not switch him to a higher bit rate. Because of this, this user effectively is not served with the service (bit rate) that he was supposed to be served at this area.

### Scenario 5

For the sake of this scenario lets assume that A=384, B=128, y= 62. In this scenario two users have been initially given 384 kbps at the edge of the cell. Assume that a third user enters the system and he is close to the BTS. This user will be given 64 kbps or even lower because most of the resources are occupied by the users at the edge of the cell using 384 kbps. The result will be that a fourth user at the edge of the cell will be rejected because there are no available resources. In this scenario it is obvious the service degradation that is happening. The user that will be rejected may also be a voice user e.g. at 12.2 kbps.

The allocation of bit rate based on the cell loading and/or user capabilities and/or system capabilities implies that independent of the link budget, any bit rate will be allocated anywhere as long as long as there is sufficient capacity. However, this means that a user at the edge of the cell may be allocated 384 kbps if there is capacity and a user that may enter later the system will be allocated 64 kbps even if he is standing close to the BTS. This will create the following issues:

- *Coverage holes*
- *Cell planning is not related at all to the system behaviour*
- *User will be unnecessarily dropped.*
- *Users will be denied access in areas that they should not, because other users in other areas are using more resources than the ones they should use.*
- *No possibility of controlling the dynamics of the system*

According to the present invention the link budget parameters are considered during bit rate allocation that is happening dynamically in the Radio Network Controller (RNC). Thus, the invention provides a method of allocating bit rate according to annexed claim 1.

Specifically, the method comprises

(a) determining the path loss from an established data flow between a transceiver and a base station;

(b) determining the bit rate that can be supported in the location of the mobile transceiver from a predetermined relationship between path loss and bit rate, and

(c) allocating a bit rate to a data flow between the transceiver and the BTS taking into account the bit rate calculated in step (b).

It will be appreciated from the foregoing that the "predetermined relationship between path loss and bit rate" will usually be readily available from the link budget devised at the planning stage. However, this might be revised as a result of experience or alternatively a new link budget for the "live" scenario might be devised. The point is that the bit rate allocation that is happening in a live network takes account of the path loss which is related to the distance between the user equipment and the BTS.

The method can be used to allocate uplink bit rate only or downlink only, or both. It may be that a separate link budget is devised for uplink and downlink data flows in which case the link budget used in the bit rate allocation will depend on whether an uplink or a downlink data flow is being considered.

The path loss measurements may be provided by the transceiver. Alternatively, path loss measurements may be calculated from power measurements provided by the transceiver. The pathloss is the same for both Uplink and Downlink since it depends only on the distance of the User Equipment from the Base Station. Since it can be assumed that path loss is approximately the same for both Uplink and Downlink, only the Downlink or Uplink pathloss measurements are required to be determined and to be used in the method described in this idea.

The bit rate determined in step (b) of the method described above will be one of a number of factors used to determine what bit rate should be allocated to a data flow. Other factors will become apparent from the description which follows. Usually the bit rate determined, for example, from the link budget will be used as a threshold which the bit rate allocated to a data flow may not exceed.

It will be clear from the foregoing explanation of the link budget that the "predetermined relationship between path loss and bit rate" preferably defines, by the link budget or otherwise, a plurality of threshold path loss measurements and a maximum bit rate corresponding to each path loss measurement.

The method may be used to allocate bit rate to a new data flow, e.g. call or to reallocate bit rate to an existing data flow. In the later case, reallocation might be necessary, for example, when a user has moved further away from the BTS.

Reallocation of bit rate does not necessarily lead to immediate reconfiguration in the case of an existing data flow. If the allocated bit rate is less than the bit rate already being used by the data flow, the might simply be "marked" for reconfiguration or release at a later stage if required, for example, by cell loading conditions, e.g. congestion in the cell. If the user is a real time (RT) user release is more likely than reconfiguration.

An embodiment of the invention will now be described by way of example only with reference to the accompanying drawings in which:

Figure 1 is a schematic diagram of a cell divided into regions;

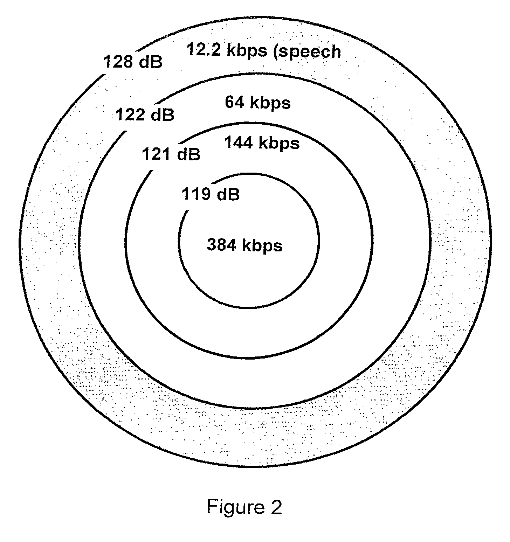

Figure 2 is a schematic diagram similar to Figure 1 showing examples of path losses and corresponding bit rates for the regions;

Figure 3 is a schematic diagram showing several cells subdivided into regions, for the purpose of illustrating the unwanted scenarios described above;

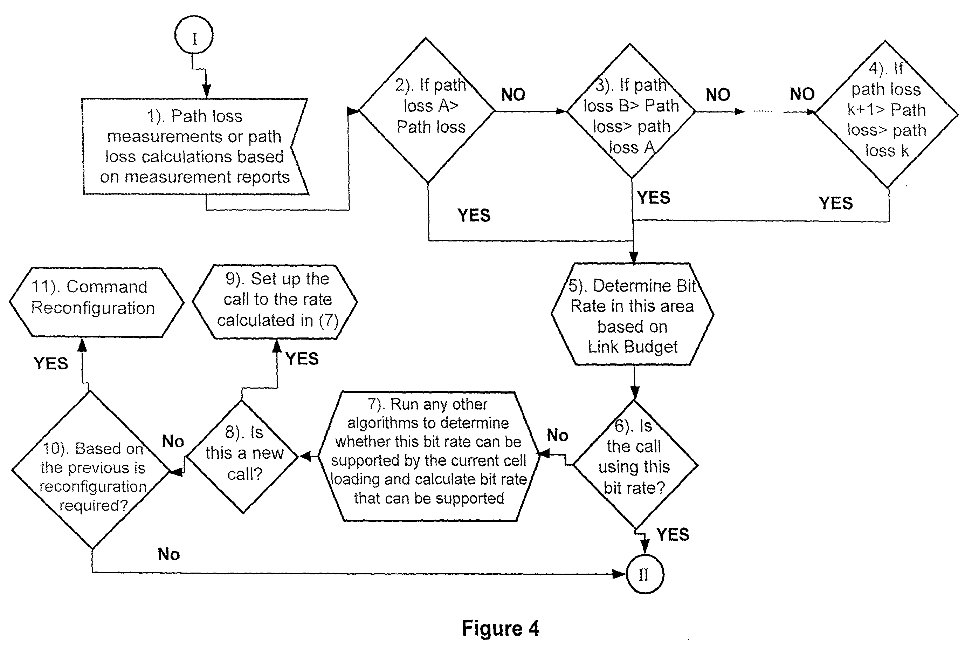

Figure 4 is a flowchart showing an algorithm suitable for carrying out the method of the invention, applicable to uplink (UL) and downlink (DL) communications;

The algorithm shown in Figure 4 can be applied to any standard system compliant with 3GPP in order to solve the issues mentioned in the previous sections.

A description of the algorithm is as follows: (The numbered paragraphs correspond to the numbered steps of Figure 4).

With the state 'I' we represent any state that the system can be in when a measurement report enters the system or when the system uses this feature to allocate the bit rate (e.g. during call setup).

1). From state 'I' the system can enter step (1) when path loss measurements are calculated in the RNC (radio network controller) or are reported to the RNC. Currently there are two possibilities within 3GPP : the user reports either the path loss or the CPICH (common pilot channel) RSCP (received signal code power). In the second case the RNC has to calculate the path loss. Calculations of the path loss are not part of this idea, however, a possible solution could be as described in the specific example to be described below.

2). Upon receiving the path loss measurements the system has to compare them with the path loss thresholds used in the link budget calculations.

Path loss thresholds should be defined per cell rather than per RNC, because the link budget depends on the area to cover, and service type. Moreover, the path loss comparison should be done separately for UL and for DL if there are separate uplink and downlink link budgets.

*Note: The path loss at the current UE (user equipment i.e. transceiver) position can be calculated based on UE measurements. These measurements are sufficient. If measurements by the UE are available to calculate the path loss or the UE reports directly the path loss, then measurements by the BTS are not required. However, the path loss values are required to perform the comparison with the threshold values for both the UL and DL.* Calculations of the path loss are not part of this idea, however, a possible solution could be as described in the example below.

If the path loss is greater than the threshold path loss for the closest region to the BTS according to the link budget, the algorithm moves to step 3.

3). Same procedure as step (2) using higher threshold path loss.

4). Same procedure as steps (2) and (3) using higher threshold path loss. Further similar steps may be added according to the number of regions defined in the cell.

5). Upon identifying that the path loss measured is within any of the path loss areas determined by the link budget, the system has to determine what bit rate was supposed to be used within this area. At this stage the determination is based on the link budget assumptions. Thus, if the link budget is as shown in Figure 2 then if 119dB>path loss>121dB, the bit rate will be determined as 144 kbps in step 5

6). The system has to check whether the call is already using the bit rate determined at step 5. If yes, then the system enters in state 'II'. This can happen for example when the user is already in a call and the path loss measurements / or CPICH RSCP measurements are received and the RNC calculates the path loss based on these measurements CPICH RSCP but it is found that no change in the bit rate is required.

7). If not, then the system has to calculate what bit rate the cell can support based on the cell loading (this has to be done for UL and /or DL). This can happen for example during the call establishment, or during the call when a measurement report is received, or during Handover request.

The calculation follows the rules given below:

For NRT (non real time) users:

For the DL :Bit Rate := Low[Cell supported bit rate , bit rate based on link budget calculations, user/system supported bit rate, user requested bit rate]

For the UL the Min SF should be calculated for the bit rate that can be:

Bit Rate := Low[Cell supported bit rate , bit rate based on link budget calculations, user/system supported bit rate, user requested bit rate]

Note: In the above statements, the **Cell Supported Rate** is the bit rate that the cell can support due to load limitations i.e. the interference generated in the cell is more than predetermine thresholds. The **Cell Supported Rate** is calculated by the system based on the current cell loading, threshold parameters and/or users loading contribution. Moreover, in the above statement the **user/system supported bit rate** is the bit rate the user or the system can support. For example this bit rate can be determined by the user equipment capabilities or by the system capabilities to support different bit rates.

For RT users:

If this feature was triggered during call set-up, then
If the bit rate requested is not available because either :

a). the system can not support it due to load threshold restrictions, or

b). Bit Rate := Low[Cell supported bit rate , bit rate based on link budget calculations, user/system supported bit rate, user requested bit rate]≠ user requested bit rate

then the RT user will be rejected.

Otherwise if this feature is triggered during the call duration but the bit rate calculated by this feature is less than the bit rate the RT user is using, the user will be marked.

*For in systems that enable QoS (quality of service)negotiations then if:*

a). the system can not support the bit rate due to load threshold restrictions, or

b). Bit Rate := Low[Cell supported bit rate , bit rate based on link budget calculations, user/system supported bit rate, user requested bit rate]≠ user requested bit rate

The RNC will try to negotiate the bit rate over Iu interface to be :
Bit Rate := Low[Cell supported bit rate , bit rate based on link budget calculations, user/system supported bit rate, user requested bit rate]
8). If the call is new then the system enters step (9). If the call is not new then the system will enter in step 10). 9). In this step the system will set up the new call on the bit rate as described in step 7, depending whether the user is NRT or RT user.
10). If the call is not new (e.g. HO request where the target cell can not set-up on the bit rate requested, or during the call duration in any call), then it has to be determined whether reconfiguration of the existing call is required. If yes (NRT user or NRT PS+CS user and the bit rate on the PS NRT bearer is higher than the one calculated in step 7), then the system will enter step (11), otherwise (if the user is RT user and he is using higher bit rate that he should use in this region) it will enter in state (II).
11). In this step the system will command reconfiguration
As state 'II' we represent any state that the system needs to enter after the previous algorithm's decision. This state can be any state. If the system returns to state (II) from step (10) then if the user is a RT user and he is using higher bit rate than the one he could use in this region, the user is marked before the system enters state (II). These RT users that have been marked may be chosen effectively from the congestion control algorithm when congestion will appear. This can happen for e.g. RT user or for PS user that reconfiguration is not possible or for CS user, using higher bit rates than the ones the system allows.
The proposed idea is an approach to allocate the resources dynamically in the system while on the same time the rules followed during the network planning are followed. It is simple, easy to implement, and more important no modifications in the standards is required to make this feature to work. Therefore, its implementation could be easy and achieved in early stage as well as in any development stage.
Path loss can either be reported or calculated. It can also be reported on common channels already available in 3G network proposals.

**Example of how this idea can implemented**

The example that will follow describes how this idea can be implemented in a 3G system. It is not the only way of implementing this idea, however, it can help in the understanding of the issues involved.

*Location of the feature*

The invention would usually be implemented as a software feature located in the RNC (Radio Network Controller)

*Possible implementation issues*

The possible implementation issues that may appear are as follows:

    a. How the path loss will be measured?
    b. How often the path loss measurements will be received?
    c. How the handover will be treated?
    d. How the RT users will be treated?
    e. How the feature will be activated/deactivated
    f. How the feature will be optimised
    g. Possible interactions of this feature with different functions?

In the following most of the issues above are covered.

Path loss measurements

When RNC=SRNC (Serving RNC)

There are two possible ways to have path loss parameter in the RNC. The choice of the most appropriate way depends on the UE capabilities. The different methods to measure the path loss parameter are:

a. When the UE (User Equipment) is in DCH (dedicated channel) state:

> a. To use the events given in TS 25.331 (a radio resource Control Specification of 3GPP) specifying as parameters the 'path loss'
> b. To Receive measurement reports of the CPICH (Common Pilot Channel) RSCP RSCP (Received Signal Code Power). These reports can be either periodic or event triggered and calculate the path loss as follows.

> Path loss in dB = Primary CPICH Tx power - CPICH RSCP.

> Primary CPICH Tx (transmit) power : This parameter is known to the RNC. It is used within the Cell Info information element and the PRACH (Physical Random Channel) system information list. This parameter is given to the RNC with O&M (operation and maintenance functions). This parameters is the same with the parameter given with the information element: "Primary CPICH Tx power".
> CPICH RSCP: This parameter is reported to the RNC from the UE and the unit is dBm.

b. When the UE is not in CELL_DCH state, then measurement reports on common channels can be used to calculate the path loss. An explanation of this is given below:
> Among the parameters the UE can report on common channels are the:

- CPICH Ec/No
- CPICH RSCP
- Path loss

*Calculation of the path loss when the UE does not support path loss measurements:*

In this case the path loss can be calculated as shown in (1):

> Path loss in dB = Primary CPICH Tx power - CPICH RSCP (1)

The parameters used in (1) are given to the RNC as follows:

Primary CPICH Tx power : This parameter is known to the RNC. It is used to send the Cell Info information element and the PRACH system information list. This parameter is given to the RNC with O&M.

CPICH RSCP: This parameter is reported to the RNC using one of the messages used to report measurements on common channels.

Calculation of the path loss when the UE supports path loss measurements

If the UE supports path loss measurements, then the UE will report on common channels the path loss measurement using one of the messages used to report measurements on common channels.
The messages used to report measurements on common channels are:

- RRC CONNECTION REQUEST message sent to establish an RRC connection;

- INITIAL DIRECT TRANSFER message sent uplink to establish a signalling connection;

- UPLINK DIRECT TRANSFER message to transfer NAS messages for an existing signalling connection;

- CELL UPDATE message sent to respond to a UTRAN originated page;

- MEASUREMENT REPORT message sent to report uplink traffic volume;

When RNC=DRNC (drift RNC) during call set-up/RL Addition

One possible way to performed path loss calculation when the RNC=DRNC and it should be activated depending on the operators requirements.

Calculation:

The CPICH Ec/No is given to the DRNC with the RL Setup/RL Addition Request message. This value will be used for the calculation of the path loss.
Path loss = function of ((Ec/No)intial, (Ec/No) measured).
Where:

(Ec/No )initial is the initial Ec/No for the pilot channel

(Ec/No) measured is the measured Ec/No reported to the DRNC from the SRNC during the RL Setup Request.

The measurements of the path loss during the call are performed in the SRNC. The DRNC cannot reconfigure the bit rate because of the path loss calculations. However, assuming that the handover happens in overlapping areas then there is a big probability that when the SRNC will detect a bit rate reconfiguration due to link budget there is a big chance that this will be required in the DRNC as well.

Process of path loss reports

Independent of the way the RNC will receive the path loss measurements the path loss results has to be processed to avoid misleading information.
It is implementation specific how the measurement reports will be processed to produce the final path loss measurements.

Configuration of this feature

This feature should be:

1. Activated and Deactivated by the operator
2. The threshold values should be configured by the operator
3. The bit rates that mapped to the path loss threshold values should be set by the operator on a per cell basis for both UL and DL

Threshold configuration

The thresholds configuration should be sent to the system using O&M and should be set by the operator. The configuration of these thresholds should be also possible to be controlled depending on the environment. Therefore, the threshold values should be set on a per cell basis.

Feature behaviour during call set-up

During the call set-up, assuming that the UE can send measurements during the RRC connection Set-up request, then the system is aware of the path loss measurements.
Based on the path loss measurements, the RNC can calculate the minimum bit rate the user can be established.

UL case

During call setup the path that will follow for the UL is:
I, 1,2,3,...4, 5,6,7,8,10
Please refer to Figure 4 for the numbers. The path loss measurements will be reported using the common channels.

DL case

The path that will be followed for the DL case is I, 1,2,3,..,4,5,6,7,8,10.
Please refer to Figure 4 for the numbers.
The path loss measurements will be calculated /reported using the common channels. The same path loss measurements that were used in the UL will be used in the DL, the difference though it will be in the path loss thresholds used for the DL.

Feature behaviour for RT versus NRT during call set-up

If the user is a RT user and the bit rate he requests is not available in either UL or DL based on R99 specifications this user will be rejected from the system.

If the user is a NRT user then he will be established on the bit rate available.

If the user is a RT user and he requests a bit rate lower than /or equal to the one the cell can support or the path loss can give, then this user he will be granted access.

Feature behaviour during the call duration

During the call duration the difference in the feature will be based on the type of Radio Bearer.

If the bearer is RT bearer, then nothing will be done if the user is using higher bit rate than the one the cell allow him, however, he will be marked as 'bad' user. This information can be for example used by the congestion control algorithm when congestion will appear.

If the user is NRT, then if he is using higher bit rate than the system allows in this region to be used, then the system will command reconfiguration of the user.

Feature behaviour during the Handover

During handover the same approach as the one that is followed during call set-up will be followed. The difference though is that if the bit rate in the new cell is not possible then there are two possibilities:

a. If the RNC supports reconfiguration of handover legs for NRT and the bit rate is not available in one of the handover leg, then a reconfiguration will be commanded

b. If the RNC will not support this. Then the handover will be rejected, and preferably the call will be dropped.

For RT users, if the bit rate in the target cell is not available then the users will be dropped.

During HO the bit rate that the user can be established will be calculated in the RNC for the case the RNC=SRNC.

For the case the CRNC=DRNC, the bit rate this user will request in the DRNC during handover will be the bit rate the SRNC is using for this user.

Feature behaviour for RT versus NRT during handover

If the user is RT user and the bit rate is not available in the target cell, there will be a HO failure.

If the user is NRT user, and the bit rate requested in the target cell is not available then the following behaviour is required will be either:

a. HO failure
b. Or the call will be reconfigured to the lowest bit rate, instead of releasing the call.

**Claims**

1.  A method in a live network of dynamically allocating bit rates to data flows in a mobile telecommunications system which enables communications over a geographical area divided into cells, each cell having a base transmitter station (BTS) which transmits digital data to and/or receives digital data from mobile transceivers within the cell, and wherein the transfer of data from the BTS to transceivers and/or vice versa may take place at various bit rates, the method comprising:

(a) determining the path loss from an established data flow between a transceiver and a base station;

(b) determining the bit rate that can be supported in the location of the mobile transceiver from a predetermined relationship between path loss and bit rate, and

(c) allocating a bit rate to a data flow between the transceiver and the BTS taking into account the bit rate calculated in step (b).

2.  A method as claimed in claim 1 in which step (a) comprises receiving path loss measurements provided from the transceiver.

3.  A method as claimed in claim 1 in which path loss is calculated from power measurements provided by the transceiver.

4.  A method as claimed in any preceding claim in which the bit rate in step (c) is allocated for an uplink data flow.

5.  A method as claimed in any preceding claim in which the bit rate in step (c) is allocated for a downlink data flow.

6.  A method as claimed in any preceding claim in which the bit rate determined in step (b) is used as a threshold which the bit rate allocated to a data flow does not exceed.

7.  A method as claimed in any preceding claim in which the predetermined relationship between path loss and bit rate defines a plurality of threshold path loss measurements and a maximum bit rate corresponding to each threshold path loss measurement.

8.  Use of a method as claimed in any preceding claim to allocate bit rate to a new data flow.

9.  Use of a method as claimed in any of claims 1 to 7 to reallocate bit rate to an existing data flow.

10. Use as claimed in claim 9 wherein if the bit rate allocated in step (c) is less than the bit rate already being used by the data flow, the data flow is marked for reconfiguration or possible release at a later stage if necessary.

Figure 1

128 dB

12.2 kbps (speech

122 dB

64 kbps

121 dB

144 kbps

119 dB

384 kbps

Figure 2

Figure 3

**Figure 4**